# EUROPÄISCHE PATENTSCHRIFT

(11) **EP 0 866 760 B1**
(45) Veröffentlichungstag und Bekanntmachung des Hinweises auf die Patenterteilung: **06.05.1999**
(21) Anmeldenummer: 96939041.8
(22) Anmeldetag: 14.11.1996
(51) Int. Cl.: B62D 5/06, B62D 5/30

(54) **HYDRAULISCHE SERVOLENKUNG**
HYDRAULIC POWER-ASSISTED STEERING
DIRECTION ASSISTEE HYDRAULIQUE

(30) Priorität: 15.12.1995 DE 19546942
(43) Veröffentlichungstag der Anmeldung: 30.09.1998
(73) Patentinhaber: DaimlerChrysler AG, 70567 Stuttgart (DE)
(72) Erfinder: BOHNER, Hubert, D-71032 Böblingen (DE); MOSER, Martin, D-70736 Fellbach (DE)
(86) Internationale Anmeldenummer: EP9604997
(87) Internationale Veröffentlichungsnummer: WO9722508

(56) Entgegenhaltungen:
- DE-A- 4 207 719
- DE-A- 4 304 664
- FR-A- 2 040 906
- PATENT ABSTRACTS OF JAPAN vol. 95, no. 008 & JP 07 125643 A (TOYOTA MOTOR CORP), 16.Mai 1995,

## Beschreibung

Die Erfindung betrifft eine hydraulische Servolenkung für Kraftfahrzeuge, mit einem an mechanische Lenkelemente von Fahrzeuglenkrädern antriebsmäßig angeschlossenen, reversierbaren, hydrostatischen Servomotor und einer mittels einer Lenkhandhabe, insbesondere eines Lenkhandrades, steuerbaren Servoventilanordnung zur steuerbaren Verbindung des Servomotors mit einer hydraulischen Druckquelle bzw. einem relativ drucklosen Reservoir, wobei
- die Lenkhandhabe einen elektrischen bzw. elektronischen Sollwertgeber betätigt, welcher mit einem Eingang einer ausgangsseitig mit der Servoventilanordnung verbundenen elektronischen Regelstrecke verbunden ist, die über einen weiteren Eingang mit einem die Lenkstellung der Fahrzeuglenkräder wiedergebenden Istwertgeber verbunden ist,
- die Regelstrecke vollständig automatisch auf fehlerfreie Funktion überprüfbar ist,
- die Lenkhandhabe mit einem reversierbaren hydrostatischen Förderorgan zwangsgekoppelt ist, und
- zwischen dem Servomotor und dem Förderorgan sowie dem Servoventil ein Umschaltventilaggregat angeordnet ist, welches bei Fehlfunktion der Regelstrecke den Servomotor - unter Bildung eines hydraulischen Gestänges - mit dem Förderorgan verbindet und vom Servoventil abtrennt und bei korrekter Funktion der Regelstrecke einerseits den Servomotor und das Servoventil sowie andererseits Eingang und Ausgang des Förderorgans miteinander verbindet.

Derartige Lenksysteme, welche nach dem Konzept 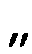 Steer by wire" arbeiten, sind beispielsweise aus der JP-A-07125643 bekannt. Falls in der sich ständig auf korrekte Funktion überprüfenden Regelstrecke eine Fehlfunktion auftreten sollte, wird ein normal aufgetrenntes hydraulisches Gestänge zwischen Lenkhandhabe bzw. Lenkhandrad und gelenkten Fahrzeugrädern wirksam. Dieses hydraulische Gestänge besteht im wesentlichen aus einem mit der Lenkhandhabe zwangsgekoppelten hydrostatischen Förderorgan, welches im Notfall hydraulisch mit dem hydrostatischen Servomotor zwangsgekoppelt wird.

Ein ähnliches Lenksystem ist Gegenstand der FR-A- 2627 737.

Bei derartigen Systemen besteht ein gewisses Risiko darin, daß das im Notfall einzuschaltende hydraulische Gestänge während des Normalbetriebes einen Defekt erleidet. Da das genannte hydraulische Gestänge beim Normalbetrieb praktisch funktionslos ist, kann ein solcher Defekt nur schwer bemerkt werden. Andererseits führt ein solcher Defekt dazu, daß das hydraulische Gestänge bei einem Notfall nicht oder nur eingeschränkt einsetzbar ist.

Dieses Problem wurde bislang nicht zufriedenstellend gelöst. Deshalb ist es Aufgabe der Erfindung, bei einer Lenkung der eingangs angegebenen Art eine deutlich erhöhte Sicherheit zu gewährleisten.

Diese Aufgabe wird erfindungsgemäß dadurch gelöst, daß das mit der Lenkhandhabe zwangsgekoppelte Förderorgan über ein Rückschlagventil ständig mit einer Druckquelle verbunden ist.

Die Erfindung beruht auf dem allgemeinen Gedanken, das bei einer Fehlfunktion der Regelstrecke wirksam werdende hydraulische Gestänge ständig mit Druckmedium zu versorgen, d.h. unter einer hydraulischen Vorspannung zu halten und dementsprechend ständig eine vollständige Füllung mit Hydraulikmedium sicherzustellen. Dadurch läßt sich einerseits die Lenkgenauigkeit des hydraulischen Gestänges erhöhen. Andererseits kann das hydraulische Gestänge leicht auf eventuelle Leckagen überwacht werden.

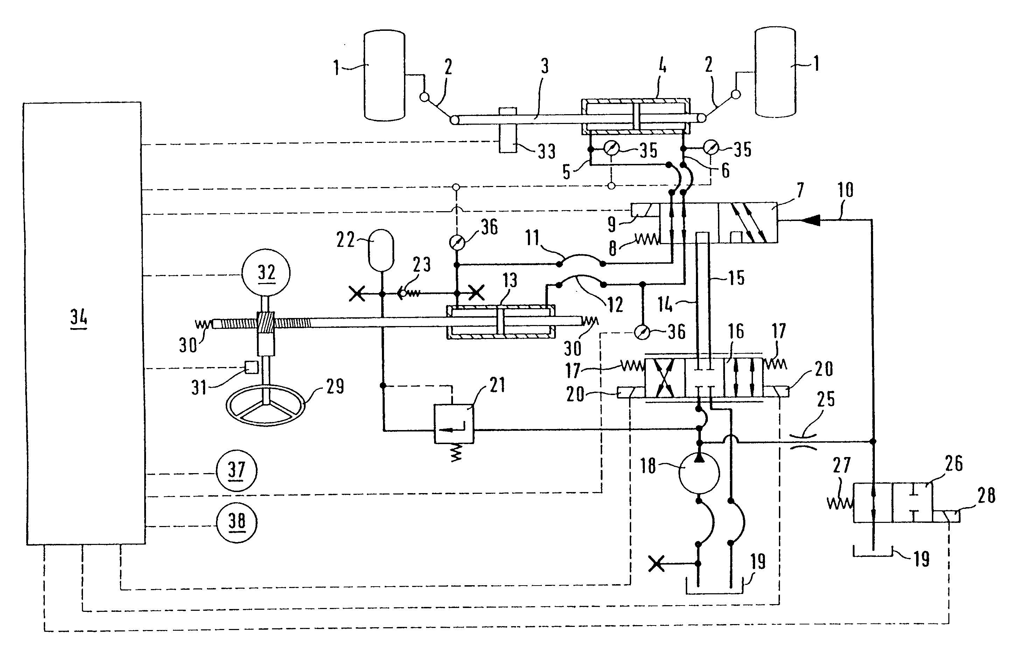

Im übrigen wird hinsichtlich bevorzugter Merkmale der Erfindung auf die Ansprüche sowie die nachfolgende Erläuterung der Zeichnung verwiesen, anhand der besonders bevorzugte Merkmale dargestellt werden.

Dabei zeigt die einzige Figur eine schaltplanmäßige Darstellung des erfindungsgemäßen Lenksystems.

Gemäß der Zeichnung besitzt ein im übrigen nicht dargestelltes Kraftfahrzeug eine Achse mit lenkbaren Rädern 1, die zu ihrer Lenkverstellung mittels Spurstangen 2 mit einer Kolbenstange 3 eines doppeltwirkenden Kolben-Zylinder-Aggregates 4 verbunden sind. Bei Längsverschiebung der Kolbenstange 3 in der einen oder anderen Richtung werden also die Räder 1 nach rechts oder links gelenkt.

Die beiden Seiten des Kolben-Zylinder-Aggregates 4 sind über Leitungen 5 und 6 mit zwei Anschlüssen eines Umschaltventilaggregates 7 verbunden, welches als 6/2 Ventil ausgebildet ist. Das Umschaltventilaggregat 7 wird durch eine Feder 8 ständig in die dargestellte Schaltstellung gedrängt und kann durch Bestromung eines Elektromagnetes 9 und/oder durch hydraulische Druckbeaufschlagung eines Steueranschlusses 10 in seine andere Schaltstellung gebracht werden.

In der dargestellten Lage des Umschaltventilaggregates 7 werden die Leitungen 5 und 6 mit zwei Leitungen 11 und 12 verbunden, die zu den beiden Seiten eines weiteren Kolben-Zylinder-Aggregates führen. Außerdem werden in der dargestellten Lage des Umschaltventilaggregates 7 zwei Leitungen 14 und 15 miteinander verbunden, die zu einer Steuerventilanordnung 16 führen.

In der anderen Lage des Umschaltventilaggregates 7 werden die beiden Leitungen 11 und 12 miteinander verbunden, so daß das Kolben-Zylinderaggregat 13 auf Freilauf geschaltet ist. Außerdem werden die Leitungen 5 und 6 mit den zur Steuerventilanordnung 16 führenden Leitungen 14 und 15 verbunden.

Die Steuerventilanordnung 16 wird durch Federn 17 in die dargestellte Mittellage gedrängt, in der die Leitungen 14 und 15 gegenüber dem Druckanschluß einer Pumpe 18 sowie gegenüber einem relativ drucklosen Hydraulikreservoir 19, mit dem die Pumpe 18 saugseitig verbunden ist, abgesperrt sind. Mittels Elektromagnete 20 kann die Steuerventilanordnung 16 in die eine oder andere Richtung verstellt werden, derart, daß der Druckanschluß der Pumpe 18 entweder mehr oder weniger stark gedrosselt mit der Leitung 14 und die Leitung 15 mit dem Reservoir 19 verbunden sind. Bei Verstellung der Steuerventilanordnung 16 in die andere Richtung wird die Leitung 15 mit dem Druckanschluß der Pumpe 18 verbunden, während die Leitung 14 mit dem Reservoir 19 kommuniziert.

Der Druckanschluß der Pumpe 18 ist des weiteren über ein Druckreduzierventil 21, welches nur öffnet, wenn der Druck auf seiner Ausgangsseite unter einen vorgegebenen Schwellwert absinkt, mit einem Druckspeicher 22 verbunden, welcher über ein Rückschlagventil 23 an die Leitung 11 bzw. die eine Seite des Kolben-Zylinder-Aggregates 13 angeschlossen ist.

Um unter allen Umständen zu verhindern, daß sich der Druckspeicher 22 zur Pumpe 18 hin entladen kann, kann in Reihe vor oder hinter dem Druckreduzierventil 21 ein nicht dargestelltes Rückschlagventil angeordnet sein, welches nur eine Strömung in Richtung zum Druckspeicher 22 zuläßt.

Des weiteren kann der Druckanschluß der Pumpe 18 über eine Drossel 25 mit dem Steueranschluß 10 des Umschaltventilaggregates 7 verbunden sein, wobei der Druck am Steueranschluß 10 mittels eines zwischen Drossel 25 und Steueranschluß 10 angeschlossenen Umschaltventiles 26 steuerbar ist, welches mittels einer Feder 27 in die dargestellte Öffnungslage gedrängt wird, in der der Steueranschluß 10 mit dem Reservoir 19 verbunden und dementsprechend drucklos ist. Mittels eines Elektromagnetes 28 kann das Umschaltventil 26 in die Schließstellung umgeschaltet werden, so daß sich am Steueranschluß 10 der Druck der Druckseite der Pumpe 18 einstellt.

Die Kolbenstange des Kolben-Zylinder-Aggregates 13 ist mit einem Lenkhandrad 29 mechanisch zwangsgekoppelt, z.B. indem die Kolbenstange einen Zahnstangenabschnitt aufweist, der mit einem drehfest auf der Welle des Lenkhandrades 29 angeordneten Ritzel kämmt.

Im übrigen wird die Kolbenstange des Kolben-Zylinder-Aggregates 13 durch Federn 30 in eine Mittellage gedrängt.

Die Lenkwelle des Lenkhandrades 29 ist des weiteren mit einem Lenkwinkelsensor 31 sowie mit einem beispielsweise elektrischen Motor 32 gekoppelt, der einen am Lenkhandrad 29 fühlbaren Verstellwiderstand bzw. ein Rückstellmoment zu erzeugen vermag.

Den Lenkrädern ist ein Weg- bzw. Winkelsensor 33 zugeordnet, dessen Signale die jeweilige Lenkstellung der Räder 1 wiedergeben.

Ein Rechner 34, der eingangsseitig mit den Sensoren 31 und 33 verbunden ist, führt einen Soll-Istwert-Vergleich aus, d.h. er vergleicht die vom Lenkwinkelsensor 31 vorgegebenen Sollwerte mit dem vom Weg- bzw. Winkelsensor 33 gelieferten Istwert und betätigt dann aufgrund des Soll-Istwert-Vergleiches das Kolben-Zylinder-Aggregat 4 in nachfolgend beschriebener Weise derart, daß sich der Istwert dem Sollwert angleicht.

Solange der Rechner 34, welcher sich und das System ständig auf fehlerfreie Funktion überprüft, einen fehlerfreien Betrieb ermittelt, wird das Umschaltventilaggregat 7 in der in der Zeichnung nicht dargestellten Stellung gehalten, so daß das Kolben-Zylinder-Aggregat 4 mit der Steuerventilanordnung 16 verbunden ist, deren Elektromagnete 20 in Abhängigkeit vom vorgenannten Soll-Istwert-Vergleich vom Rechner 34 betätigt werden, wobei die Steuerventilanordnung 16 bei Bedarf eine mehr oder weniger große Druckdifferenz zwischen den Leitungen 14 und 15 und damit zwischen den Leitungen 5 und 6 des Kolben-Zylinder-Aggregates 4 herstellt und dementsprechend die Kolbenstange 3 mehr oder weniger weit bzw. schnell in der einen oder anderen Richtung verschiebt und die Räder 1 entsprechend gelenkt werden.

Die Verstellung des Umschaltventilaggregates 7 in die nicht dargestellte Lage kann durch entsprechende Ansteuerung des Elektromagnetes 9 erfolgen. Statt dessen oder zusätzlich ist es auch möglich, die entsprechende Verstellung hydraulisch vorzunehmen, indem der Rechner den Elektromagneten 28 des Umschaltventiles 26 bestromt und das Umschaltventil gegen die Kraft seiner Öffnungsfeder 27 in dessen Schließstellung bringt. Dies hat zur Folge, daß der Steuereingang 10 des Umschaltventilaggregates 7 mit entsprechendem hydraulischen Druck beaufschlagt wird und das Steuerventilaggregat 7 gegen die Kraft der Rückstellfeder 8 in die nicht dargestellte Lage verstellt.

Sollte der Rechner 34 eine Fehlfunktion feststellen, werden der Elektromagnet 9 sowie der Elektromagnet 28 des gegebenenfalls vorhandenen Umschaltventiles 26 sofort von der elektrischen Stromzufuhr abgekoppelt, so daß die entsprechenden Ventile jeweils in die dargestellten Stellungen übergehen. Wenn das Umschaltventil 25 seine Öffnungslage einnimmt, fällt der Druck am hydraulischen Steueranschluß 10 des Umschaltventilaggregates 7 sofort ab, weil auch bei weiterlaufender Pumpe 18 über die Drossel 25 nur wenig Hydraulikmedium nachfließen kann und über das geöffnete Umschaltventil 26 eine im Vergleich dazu drosselfreie Verbindung zum relativ drucklosen Reservoir 19 vorliegt. Da somit im Ergebnis weder am Steueranschluß 10 des Umschaltventilaggregates 7 ein hydraulischer Druck vorliegt noch der zugehörige Elektromagnet 9 unter Strom steht, kann die Feder 8 das Umschaltventilaggregat 7 in die dargestellte Lage bringen bzw. in dieser Lage halten.

Damit kommuniziert das Kolben-Zylinder-Aggregat 4 mit dem Kolben-Zylinder-Aggregat 13, welches übrigens immer maximal gefüllt sein muß, weil bei laufender Pumpe 18 ständig der Speicher 22 nachgeladen wird, der dann über das Rückschlagventil 23 dem Kolben-Zylinder-Aggregat 13 ständig Hydraulikmedium zuzuführen sucht. Im Ergebnis liegt eine praktisch spielfreie hydraulische Zwangskopplung zwischen den Kolben-Zylinder-Aggregaten 4 und 13 vor, sobald das Umschaltventilaggregat 7 die in der Zeichnung dargestellte Lage eingenommen hat. Da der Kolben des Kolben-Zylinder-Aggregates 13 mit dem Lenkhandrad 29 mechanisch zwangsgekoppelt ist, sind im Ergebnis die Lenkräder 1 mit dem Lenkhandrad 29 zwangsgekoppelt, d.h. auch bei Ausfall oder Fehlfunktion des Rechners 34 kann das Fahrzeug sicher gelenkt werden.

Normalerweise übernimmt der Rechner 34 auch weitere Funktionen. So steht er beispielsweise eingangsseitig mit Druckmeßgebern 35 in Verbindung, die die hydraulischen Drücke auf den beiden Seiten des Kolben-Zylinder-Aggregates 4 und damit die auf die Lenkräder 1 einwirkenden Lenkkräfte wiedergeben. In Abhängigkeit von diesen Signalen kann dann der Rechner 34 den Motor 32 steuern, so daß am Lenkhandrad 29 eine mit den Lenkkräften der Lenkräder 1 korrelierte Handkraft fühlbar wird. Obwohl also bei Normalbetrieb zwischen Lenkhandrad 29 und den Lenkrädern 1 weder ein mechanischer noch hydraulischer Durchtrieb vorliegt, werden also am Lenkhandrad 29 ein Lenkwiderstand oder eine Rückstellkraft fühlbar. Falls der Rechner 34 eine Fehlfunktion feststellt, wird der im übrigen selbsthemmungsfreie Motor 32 sofort von der Stromzufuhr abgekoppelt, weil bei solchen Betriebszuständen eine hydraulische Zwangsverbindung zwischen Lenkhandrad und den Lenkrädern 1 vorliegt.

Mit weiteren Druckmeßgebern 36 vermag der Rechner 34 die Druckverhältnisse am normalerweise im Freilaufzustand befindlichen Kolben-Zylinder-Aggregat 13 zu erkennen. Auf diese Weise läßt sich insbesondere die Dichtigkeit des Kolben-Zylinder-Aggregates 13 sowie der daran angeschlossenen Leitungen überprüfen und sicherstellen, daß das Kolben-Zylinder-Aggregat 13 tatsächlich im Falle einer Fehlfunktion des Rechners 34 und bei dem damit einhergehenden Notbetrieb für eine hydraulische Zwangskopplung zwischen Lenkhandrad 29 und Lenkrädern 1 funktionsfähig zur Verfügung steht.

Des weiteren kann der Rechner mit Sensoren 37 und 38 verbunden sein, die die Querbeschleunigung des Fahrzeuges bzw. dessen Giergeschwindigkeit überwachen. In Abhängigkeit von diesen Parametern kann der Rechner 34 bei normalem Regelbetrieb das Übersetzungsverhältnis zwischen der Drehbewegung bzw. dem Drehweg des Lenkhandrades 29 und der damit verbundenen Lenkwinkeländerung der Lenkräder 1 verändern. Insbesondere kann der Rechner 34 autonom Lenkkorrekturen vornehmen, um gefährliche Fahrzustände, beispielsweise eine beginnende Schleuderbewegung, 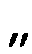 abzufangen".

## Patentansprüche

1. Hydraulische Servolenkung für Kraftfahrzeuge, mit einem an mechanische Lenkelemente von Fahrzeuglenkrädern antriebsmäßig angeschlossenen, reversierbaren, hydrostatischen Servomotor und einer mittels einer Lenkhandhabe, insbesondere eines Lenkhandrades, steuerbaren Servoventilanordnung zur steuerbaren Verbindung des Servomotors mit einer hydraulischen Druckquelle bzw. einem relativ drucklosen Reservoir, wobei
- die Lenkhandhabe einen elektrischen bzw. elektronischen Sollwertgeber betätigt, welcher mit einem Eingang einer ausgangsseitig mit der Servoventilanordnung verbundenen elektronischen Regelstrecke verbunden ist, die über einen weiteren Eingang mit einem die Lenkstellung der Fahrzeuglenkräder wiedergebenden Istwertgeber verbunden ist,
- die Regelstrecke ständig automatisch auf fehlerfreie Funktion überprüfbar ist,
- die Lenkhandhabe mit einem reversierbaren hydrostatischen Förderorgan zwangsgekoppelt ist und
- zwischen dem Servomotor und dem Förderorgan sowie dem Servoventil ein Umschaltventilaggregat angeordnet ist, welches bei Fehlfunktion der Regelstrecke den Servomotor - unter Bildung eines hydraulischen Gestänges - mit dem Förderorgan verbindet und vom Servoventil abtrennt und bei korrekter Funktion der Regelstrecke einerseits den Servomotor und das Servoventil sowie andererseits Eingang und Ausgang des Förderorgans miteinander verbindet,
**dadurch gekennzeichnet**,
daß das Förderorgan (13) über ein Rückschlagventil (23) ständig mit einer Druckquelle (22) verbunden ist.

2. Servolenkung nach Anspruch 1,
**dadurch gekennzeichnet**,
daß das Förderorgan (13) als doppeltwirkendes Kolben-Zylinder-Aggregat ausgebildet ist.

3. Servolenkung nach Anspruch 2,
**dadurch gekennzeichnet**,
daß das Kolben-Zylinder-Aggregat (13) über eine Zahnstange sowie ein damit kämmendes Ritzel mit einem Lenkhandrad (29) mechanisch zwangsgekoppelt ist.

4. Servolenkung nach einem der Ansprüche 1 bis 3,
**dadurch gekennzeichnet**,
daß der Servomotor (4) als doppeltwirkendes Kolben-Zylinder-Aggregat ausgebildet ist.

5. Servolenkung nach einem der Ansprüche 2 bis 4,
**dadurch gekennzeichnet**,
daß der Servomotor (4) sowie das Förderorgan (13) als gleichartige Kolben-Zylinder-Aggregate ausgebildet sind.

6. Servolenkung nach einem der Ansprüche 1 bis 5,
**dadurch gekennzeichnet**,
daß die Regelstrecke (34) bei fehlerfreiem Betrieb einen selbsthemmungsfreien, mit der Lenkhandhabe zwangsgekoppelten Elektromotor (32) zur Erzeugung einer an der Lenkhandhabe fühlbaren Handkraft steuert.

7. Servolenkung nach einem der Ansprüche 1 bis 6,
**dadurch gekennzeichnet**,
daß die Regelstrecke (34) bei fehlerfreiem Betrieb autonom Lenkkorrekturen einleitet, um gefährlichen Fahrzuständen, die mittels gesonderter Sensoren (37,38) registrierbar sind, entgegenzusteuern.

## Claims

1. Hydraulic servo-steering for motor vehicles, with a reversible hydrostatic servomotor connected for drive to mechanical steering elements of vehicle steering wheels and, for controllable connection of the servomotor to a hydraulic pressure source or a relatively pressureless reservoir, a servo-valve arrangement adapted to be controlled by a steering handle, particularly a steering hand wheel, in which the steering handle actuates an electric or electronic desired value transmitter which is connected to an input of an electronic controlled section connected on the upward side to a servo-valve arrangement and which us connected via a further input to an actual value transmitter which reproduces the steering position of the vehicle steering wheels and in which the controlled system is constantly and automatically verifiable for fault-free functioning and the steering handle is positively coupled to a reversible hydrostatic feeder member and in that there is between the servomotor and the feeder member as well as the servo-valve a switch-over valve assembly which in the event of a malfunction of the controlled system, forms a hydraulic linkage for connection of the servomotor to the feeder member and separates it from the servo-valve and in the event of correct functioning of the controlled system on the one hand, connects the servomotor and the servo-valve and, on the other, connects the input and output of the feeder member to each other, characterised in that the feeder member (13) is constantly connected to a pressure source (22) via a non-return valve (23).

2. A servo-steering system according to claim 1, characterised in that the feeder member (13) is constructed as a double-acting piston-cylinder assembly.

3. A servo-steering system according to claim 2, characterised the piston-cylinder assembly (13) is mechanically and positively coupled to a steering handle (29) via a rack and a pinion meshing therewith.

4. A servo-steering system according to one of claims 1 to 3, characterised in that the servomotor (4) is constructed as a double acting piston-cylinder assembly.

5. A servo-steering system according to one of claims 2 to 4, characterised in that the servomotor (4) and the feeder member (13) are constructed as identical piston-cylinder assemblies.

6. A servo-steering system according to one of claims 1 to 5, characterised in that in the event of fault-free operation, the controlled system (34) controls an electric motor (32) which is positively coupled to the steering handle in order to generate a manual force which is perceptible at the steering handle.

7. A servo-steering system according to one of claims 1 to 6, characterised in that in the event of fault-free operation, the controlled system (34) autonomously initiates steering corrections to counteract dangerous driving situations which can be recorded by separate sensors (37, 38).

## Revendications

1. Direction assistée hydraulique pour véhicules automobiles, comportant un servomoteur hydrostatique, réversible, relié, au point de vue entraînement, à des éléments mécaniques d'orientation des roues directrices du véhicule, ainsi qu'un servo-robinet pilotable au moyen d'un élément de manoeuvre d'orientation, en particulier d'un volant de direction, pour réaliser une liaison pilotable entre le servomoteur et une source de pression hydraulique ou un réservoir relativement sans pression,
dans laquelle
◆ l'élément de manoeuvre d'orientation manoeuvre un émetteur de valeur prescrite électrique ou électronique qui est relié à une entrée d'un circuit de régulation électronique qui est relié, du côté sortie, au servo-robinet et qui, par une autre entrée, est relié à un émetteur de valeur réelle qui reproduit la position d'orientation des roues directrices du véhicule,
◆ le circuit de régulation peut faire en permanence et automatiquement l'objet d'une vérification de son fonctionnement sans défaillance,
◆ l'élément de manoeuvre d'orientation est impérativement coupé à un organe hydrostatique réversible de transfert et
◆ entre le servomoteur et l'organe de transfert ainsi que le servo-robinet est disposé un mécanisme à robinet de commutation qui, en cas de fonctionnement défaillant du circuit de régulation, relie le servomoteur - formant ainsi une tringlerie hydraulique - avec l'organe de transfert et le sépare du servo-robinet et, en cas de fonctionnement correct du circuit de régulation, relie l'un à l'autre d'une part le servomoteur et le servo-robinet ainsi que d'autre part l'entrée et la sortie de l'organe de transfert,
caractérisée par le fait
◆ que l'organe de transfert (13) est relié en permanence à une source de pression (22) par l'intermédiaire d'un clapet de non-retour (23).

2. Direction assistée selon la revendication 1,
caractérisée par le fait
que l'organe de transfert (13) est conçu sous forme d'un mécanisme piston-cylindre à double action.

3. Direction assistée selon la revendication 2,
caractérisée par le fait
◆ que le mécanisme piston-cylindre (13) est impérativement coupé mécaniquement à un volant de direction (29) par l'intermédiaire d'une crémaillère et d'un pignon qui engrène avec elle.

4. Direction assistée selon l'une des revendications 1 à 3,
caractérisée par le fait
◆ que le servomoteur (4) est conçu sous forme d'un mécanisme piston-cylindre à double action.

5. Direction assistée selon l'une des revendications 2 à 4,
caractérisée par le fait
◆ que le servomoteur (4) ainsi que l'organe de transfert (13) sont conçus sous forme de mécanismes piston-cylindre identiques.

6. Direction assistée selon l'une des revendications 1 à 5,
caractérisée par le fait
◆ qu'en cas de fonctionnement non défaillant, le circuit de régulation (34) commande un moteur électrique (32) non auto-bloquant, impérativement coupé à l'élément de manoeuvre d'orientation, pour produire une force manuellement sensible à l'élément de manoeuvre d'orientation.

7. Direction assistée selon l'une des revendications 1 à 6,
caractérisée par le fait
◆ qu'en cas de fonctionnement non défaillant, le circuit de régulation (34) provoque de lui-même des corrections d'orientation pour s'opposer à des situations de conduite risquées qui peuvent être enregistrées au moyen de détecteurs particuliers (37, 38).
